# EUROPÄISCHE PATENTSCHRIFT

(11) **EP 3 649 068 B1**
(45) Veröffentlichungstag und Bekanntmachung des Hinweises auf die Patenterteilung: **19.06.2024**
(21) Anmeldenummer: 19742026.8
(22) Anmeldetag: 16.07.2019
(51) Int. Cl.: B65G 39/02, F16C 3/02, F16C 13/00

(54) **FÖRDERROLLENACHSE**
CONVEYOR ROLLER'S AXIS
AXE DE ROULEAU DE CONVOYEUR

(30) Priorität: 19.07.2018 DE 102018005700
(43) Veröffentlichungstag der Anmeldung: 13.05.2020
(73) Patentinhaber: Interroll Holding AG, 6592 Sant'Antonino (CH)
(72) Erfinder: DOROK, Ralf, 42929 Wermelskirchen (DE); LEMKE, Jörg, 42929 Wermelskirchen (DE)
(74) Vertreter: Kohlhof, Stephan
(86) Internationale Anmeldenummer: PCT/EP2019/069130
(87) Internationale Veröffentlichungsnummer: WO 2020/016231

(56) Entgegenhaltungen:
- EP-A1- 1 174 373
- FR-A1- 3 035 459
- US-A- 4 213 523
- US-A1- 2014 202 823

## Beschreibung

Die Erfindung betrifft eine Achse und ein Verfahren zur Herstellung einer Achse für eine Förderrolle.

Um Förderrollen in den unterschiedlichen Konfigurationen herstellen zu können, ist es bislang erforderlich, viele verschiedene Teile zu bevorraten, insbesondere auch Achsen verschiedener Dimensionen und Konfigurationen. Dies bedingt einen entsprechenden Raumbedarf zur Bevorratung, einen hohen Zeitaufwand zum Bereitstellen der jeweils benötigten Achsen sowie einen erheblichen Zeitaufwand zur Endmontage der betreffenden Förderrolle.

FR 3 035 459 A1 beschreibt eine Rolle mit integriertem Motor.

US 2014/202823 A1 beschreibt eine mehrgliedrige Achse für eine Laufrolle, die ein Achsmittelrohr mit einem ersten und einem zweiten Ende aufweist. Die Achse umfasst außerdem einen ersten Achsstummel, der formschlüssig mit dem ersten Ende des Achsmittelrohrs verbunden ist, und einen zweiten Achsstummel, der formschlüssig mit dem zweiten Ende des Achsmittelrohrs verbunden ist.

Es ist daher eine Aufgabe der vorliegenden Erfindung, die Ausgestaltung und das Herstellungsverfahren einer Achse für Förderrollen vorzuschlagen, die eine geringe Bevorratung von erforderlichen Teilen sowie eine schnelle Montage der herzustellenden Förderrolle ermöglicht.

Diese Aufgabe wird, bezüglich der Achse, durch den Gegenstand des entsprechenden unabhängigen Anspruchs gelöst und, bezüglich des Herstellungsverfahrens, durch die entsprechenden unabhängigen Verfahrensansprüche gelöst. Vorteilhafte Ausführungsformen sind Gegenstand der jeweiligen Unteransprüche.

Ein erster Aspekt, der für das Verständnis hilfreich ist, wie die Aufgabe gelöst wird, betrifft eine Achse für eine Förderrolle umfassend: ein erstes Achselement; und ein zweites Achselement; wobei das erste Achselement zumindest im Bereich eines freien Endes einen Hohlraum aufweist; und das zweite Achselement zumindest bereichsweise in dem Hohlraum des ersten Achselements angeordnet ist und in dem Hohlraum kraftschlüssig, formschlüssig und/oder stoffschlüssig mit dem ersten Achselement verbunden ist.

Durch die vorgeschlagene Achse wird eine hohe Produktionsrate erreicht, da ein automatisiertes, individuelles Zusammenfügen der einzelnen Achselemente nunmehr möglich ist. Die Anzahl von Vorratsbehältern kann erheblich reduziert werden, wobei dennoch hohe Stückzahlen bei geringstem Zeitaufwand für die Montage möglich sind. Ferner können problemlos unterschiedliche Ausgestaltungen hinsichtlich Achslänge, Achsendenform und/oder Achsüberstand problemlos realisiert werden, ohne dabei den fortlaufenden Produktionsprozess unterbrechen zu müssen.

Eine solche Achse ermöglicht es überdies, auf einfache Weise verschiedene Ausgestaltungen der Achsenden bereitzustellen. Dabei wird beispielsweise ein erstes Achselement einer bestimmten Länge bereitgestellt und ein zweites Achselement, welches den spezifischen Anforderungen entsprechend ausgestaltet ist, mit dem ersten Achselement verbunden.

In diesem Aspekt kann das erste Achselement ein Adapter oder ein Achsmittelrohr sein und bei dem zweiten Achselement kann es sich entweder um einen Achsstummel oder den Adapter handeln. Dies wird anhand des nachfolgend beschriebenen, bevorzugten Ausführungsbeispiels näher erläutert.

Bevorzugt weisen die Achselemente räumlich begrenzte Verbindungsbereiche auf, in welchen die Achselemente miteinander verbunden werden, wobei das erste Achselement einen Verbindungsbereich aufweist, welcher bevorzugt entlang des Innenumfangs des Hohlraums des ersten Achselements angeordnet ist; das zweite Achselement einen Verbindungsbereich aufweist, welcher bevorzugt entlang des Außenumfangs des zweiten Achselements angeordnet ist; und das erste Achselement mit dem zweiten Achselement zumindest in den Verbindungsbereichen kraftschlüssig, formschlüssig und/oder stoffschlüssig verbunden ist.

Die Achselemente werden dabei derart relativ zueinander angeordnet, dass die Verbindungsbereiche in Radialrichtung, d.h. senkrecht zur Längsachse der zu verbindenden Achselemente, gegenüber bzw. aneinander liegen.

Mit Vorteil weisen der achsensenkrechte Querschnitt des Hohlraums des ersten Achselements und der achsensenkrechte Querschnitt des zweiten Achselements im Wesentlichen die gleiche Form auf. Bei gleichförmigen Querschnitten ist das gewünschte kraftschlüssige, formschlüssige und/oder stoffschlüssige Verbinden in optimierter Weise zu erreichen, weil lediglich ein minimales Verformen der zu verbindenden Achselemente erforderlich ist.

Zweckmäßigerweise sind die entsprechenden achsensenkrechten Querschnitt rund oder vieleckig, insbesondere viereckig, sechseckig oder achteckig ausgebildet.

Grundsätzlich können die Querschnitte jede beliebige Form aufweisen, welche dafür geeignet ist, das zweite Achselement schnell und einfach zumindest bereichsweise in dem Hohlraum des ersten Achselementes anzuordnen. Besonders bevorzugt kann dabei das erste und das zweite Achselement derart ausgebildet sein, dass das erste Achselement und das zweite Achselement durch den Innenumfang des Hohlraums des ersten Achselements und des Außenumfangs des zweiten Achselements, insbesondere in achsensenkrechter Richtung, formschlüssig verbunden sind. Insbesondere ist das zweite Achselement in dem Hohlraum des ersten Achselements zumindest bereichsweise derart angeordnet, dass diese drehfest miteinander verbunden sind. Dies kann beispielsweise durch einen identischen, vieleckigen Querschnitt des Hohlraumes des ersten Achselements und des Außenumfangs des zweiten Achselements erreicht werden. Besonders bevorzugt sind der Hohlraum des ersten Achselements und das zweite Achselement derart ausgestaltet und dimensioniert, dass bei Anordnen des zweiten Achselements in dem Hohlraum des ersten Achselements, nur ein geringer Spalt bzw. Abstand zwischen dem Außenumfang des zweiten Achselements und dem Innenumfang des Hohlraums des ersten Achselements ausgebildet ist. Dies kann beispielsweise durch einen runden bzw. sechseckigen Querschnitt erreicht werden, wobei der Innenumfang des Hohlraums des ersten Achselements geringfügig größer ist als der Außenumfang des zweiten Achselements. Das Verhältnis des Innenumfangs des Hohlraums des ersten Achselements zu dem Außenumfang des zweiten Achselements ist dabei vorzugsweise derart, dass ein Anordnen der Achselemente in Axialrichtung auf einfache Weise erfolgt, jedoch eine relative Drehbewegung im Wesentlichen gehemmt ist.

Bevorzugt weisen das erste Achselement und/oder das zweite Achselements in den Verbindungsbereichen zumindest eine Einbuchtung, Nut, Rille, Ritze, Riefe, Kerbe, Ausbuchtung, Wulst und/oder Feder auf, wobei diese bevorzugt zumindest bereichsweise entlang des Innenumfangs des Hohlraums des ersten Achselements bzw. entlang des Außenumfangs des zweiten Achselements vorgesehen ist. Die Erstreckung der jeweiligen Konfigurationen kann dabei in den Längsachsenrichtungen der zu verbindenden Achselemente und/oder in deren Umfangsrichtungen erfolgen. Eine solche oder ähnliche Oberflächenstrukturierung ist insbesondere vorteilhaft zum Erreichen einer kraft-/formschlüssigen Verbindung zwischen den Achselementen, erhöht Abzugskräfte in Längsachsenrichtung und verhindert zusätzlich die nicht gewünschte relative Verdrehung zwischen den zu verbindenden Achselementen. Alternativ und/oder zusätzlich kann Haftmittel auf die Verbindungsbereiche aufgebracht werden.

Weiter bevorzugt weist das freie Ende des zweiten Achselements, welches nicht in dem Hohlraum des ersten Achselements angeordnet ist, eine Bohrung oder ein Gewinde oder eine Nut oder eine Fase oder eine Kerbe oder eine Kombination davon auf, wobei das zweite Achselement ein Achsstummel sein kann. Dieser Endbereich bzw. dieses freie Ende des zweiten Achselements ist bevorzugt derart ausgestaltet, dass eine Kopplung mit oder Lagerung an einem entsprechenden Gegenstück, beispielsweise einem Rahmen, an welchem die Achse montiert bzw. angeordnet werden soll, ermöglicht wird. Besonders bevorzugt ist ein Hohlraum, welcher an der Endfläche des zweiten Achselements vorgesehen ist, mit einem Außen- und/oder Innengewinde, besonders bevorzugt M6, M8 oder M10 als Innengewinde bzw. M8, M10, M12 oder M14 als Außengewinde, versehen ist, sodass die Achse beispielsweise durch eine entsprechende Schraube an einem Rahmen fixiert werden kann. Bevorzugt kann das freie Ende des zweiten Achselements alternativ und/oder zusätzlich eine Schlüsselfläche und/oder eine Bohrung, insbesondere in einer achsensenkrechten Richtung, aufweisen.

Bevorzugt umfasst die Achse weiter ein drittes Achselement, welches als Achsmittelrohr ausgebildet ist; wobei: das dritte Achselement zumindest im Bereich eines freien Endes einen Hohlraum aufweist; das zweite Achselement als Achsstummel ausgebildet ist; und das erste Achselement als Adapter ausgebildet ist, zumindest bereichsweise in dem Hohlraum des dritten Achselements angeordnet ist und in dem Hohlraum kraftschlüssig mit dem dritten Achselement verbunden ist.

Sofern es sich bei dem dritten Achselement um das Achsmittelrohr handelt, wie handelt es sich bei dem ersten Achselement um den Adapter und bei dem zweiten Achselement um den Achsstummel.

Mit einer solchermaßen modulartig aufgebauten Achse können sämtliche kundenspezifische Anforderungen bezüglich der Herstellung der Förderrollen auf einfach Weise realisiert werden, weil hier insbesondere die gewünschten Achslängen, Achsendenformen, Achsüberstande etc. individuell realisierst werden können.

Bevorzugt kann das dritte Achselement in Form des Achsstummels ausgebildet sein, wobei dann das erste Achselement als Achsmittelrohr und das zweite Achselement als Adapter ausgebildet ist, welcher zumindest im Bereich eines freien Endes einen Hohlraum aufweist und das dritte Achselement zumindest bereichsweise in dem Hohlraum des zweiten Achselements angeordnet und in dem Hohlraum kraftschlüssig mit dem zweiten Achselement verbunden ist.

Für den Fall, dass das dritte Achselement der Achsstummel ist, ergibt sich wiederum der zuvor genannte Vorteil einer individuellen Realisierung unterschiedlichster Ausgestaltungen von Förderrollen.

In diesen beiden bevorzugten Ausführungsformen besteht ein Achsende der Achse der Förderrolle aus nunmehr zumindest drei Achselementen, nämlich dem Achsmittelrohr, welches bevorzugt hohl ausgebildet ist, dem Adapter, der ebenfalls bevorzugt hohl ausgebildet ist, und dem Achsstummel. Diese Ausführungsformen sind insbesondere vorteilhaft, weil unterschiedlichste Ausgestaltungen von Achsen bzw. Förderrollen schnell und auf einfache Weise realisiert werden können. Insbesondere kann, beispielsweise für ein Achsmittelrohr mit stets gleichen Maßen, wie z.B. ein Hohlzylinder bzw. Rohr mit einem bestimmten Außenradius und einer bestimmten Wandstärke, ein Adapter verwendet werden, welcher geeignet ist, einen Achsstummel mit bestimmten Maßen in dem Achsmittelrohr zu lagern. Insbesondere ermöglicht die dreiteilige Ausgestaltung des Achsendes einen optimierten Herstellungsprozess, da unterschiedliche Achskonfigurationen zeit- und kosteneffizient hergestellt werden können.

Darüber hinaus besteht bei einem solchen modularen Achsende eine hohe Variabilität bezüglich der Positionierung der einzelnen Elemente in axialer Richtung, relativ zueinander. So kann beispielsweise ein Achsstummel mit einer bestimmten Länge in Axialrichtung relativ zu dem Adapter derart angeordnet und fixiert werden, dass ein gewünschter Überstand des Achsstummels über den Adapter bzw. das Achsmittelrohr erreicht wird. Dabei ist es insbesondere vorteilhaft, wenn der Hohlraum des Adapters durchgängig über die gesamte Länge des Adapters vorgesehen ist, sodass der Achsstummel derart angeordnet sein kann, dass das nicht freie Ende des Achsstummels, also das Ende, welches der Achsmitte zugewandt ist, nicht von dem Adapter umschlossen ist. Selbiges gilt für die Positionierung des Adapters in dem Hohlraum des Achsmittelrohrs.

Für den Fall, dass das dritte Achselement in Form des Achsstummels, das erste Achselement als Achsmittelrohr und das zweite Achselement als Adapter ausgebildet ist, weist das erste und/oder das zweite Achselement und/oder das dritte Achselements in den Verbindungsbereichen auf: zumindest eine Einbuchtung und/oder eine Nut und/oder eine Rille und/oder eine Ritze und/oder eine Riefe und/oder eine Kerbe und/oder eine Ausbuchtung und/oder eine Wulst und/oder Feder oder eine Kombination davon, welche bevorzugt zumindest bereichsweise entlang des Innenumfangs des Hohlraums des ersten Achselements und/oder des zweiten Achselements bzw. entlang des Außenumfangs des zweiten und/oder dritten Achselements vorgesehen ist. Wie bereits erwähnt, können sich diese Ausgestaltungen in Achsenlängsrichtung und/oder in Umfangsrichtung erstrecken.

Weiter bevorzugt weist ein Endbereich des dritten Achselements bzw. Achsstummels, welcher nicht in dem Hohlraum des zweiten Achselements angeordnet ist, eine Bohrung oder Gewinde oder Nut oder Fase oder Kerbe oder eine Kombination davon aufweist.

Die sich hier ergebenden Vorteile wurden vorab an entsprechender Stelle genannt.

Eine erfindungsgemäße Ausführungsform betrifft eine Achse für eine Förderrolle, wobei das erste Achselement als, bevorzugt hohles, Achsmittelrohr und das zweite Achselement als Adapter ausgebildet ist, wobei zwei Adapter an den jeweiligen Endbereichen des Achsmittelrohrs angeordnet sind und das dritte Achselement als Achsstummel ausgebildet ist, wobei zwei Achsstummel an den jeweiligen Endbereichen der beiden Adapter angeordnet sind.

Dabei weist das Achsmittelrohr zumindest im Bereich der beiden freien Enden jeweils einen Hohlraum auf, in welchem jeweils einer der Adapter zumindest bereichsweise angeordnet wird.

Alternativ weist das Achsmittelrohr einen über die Länge des Achsmittelrohrs durchgängigen Hohlraum auf. Die Positionierung der Adapter in axialer Richtung relativ zu dem jeweiligen Hohlraum bzw. des Hohlraums des Achsmittelrohrs ist variabel. Bevorzugt ist der Adapter relativ zu dem Achsmittelrohr derart angeordnet, dass ein Teil eines Adapters über das entsprechende freie Ende des Achsmittelrohrs hinausragt. Dies ist insbesondere vorteilhaft bei Federbeaufschlagung des Achsmittelrohrs, da sich so die Feder an der Endfläche des Adapters abstützen kann, anstatt an der im allgemeinen kleinen Endfläche des Achsmittelrohrs anzuliegen. Die Adapter weisen jeweils einen Hohlraum zumindest im Bereich des Endes auf, welches sich auf der Seite des freien Endes des Achsmittelrohrs befindet. Bevorzugt weisen die Adapter einen durchgängigen Hohlraum auf, in dem ein Achsstummel zumindest bereichsweise angeordnet sein kann. Die Achsstummel sind jeweils in dem Hohlraum einer der Adapter bevorzugt derart angeordnet, dass ein Bereich des Achsstummels über das freie Ende des Adapters und/oder des Achsmittelrohrs hinausragt.

Eine solche modulare Achse kann, wie zuvor erläutert, eine Vielzahl an Konfektionen umfassen. Insbesondere können in dieser bevorzugten Ausführungsform die folgenden Parameter der entsprechenden Teile einer Förderrolle identisch oder unterschiedlich ausgebildet sein, nämlich Durchmesser, Außenumfang, Form und/oder Länge der Achsstummel, Durchmesser, Innenumfang, Form und/oder Tiefe des Hohlraums der Adapter, Positionierung in axialer Richtung des Achsstummels relativ zu dem Hohlraum des entsprechenden Adapters sowie Positionierung in axialer Richtung des Adapters relativ zu dem entsprechenden Hohlraum des Achsmittelrohrs.

Ein zweiter Aspekt, der für das Verständnis hilfreich ist, wie die Aufgabe gelöst wird, betrifft ein Verfahren zur Herstellung einer Achse bzw. eines Achsendes einer Achse für eine Förderrolle umfassend die Schritte: Bereitstellen eines ersten Achselements, welches zumindest im Bereich eines freien Endes einen Hohlraum aufweist; Bereitstellen eines zweiten Achselements; Anordnen des zweiten Achselements zumindest bereichsweise in dem Hohlraum des ersten Achselements; und Aufbringen einer Kraft auf einen Bereich des Außenumfangs des ersten Achselements zum kraftschlüssigen Verbinden des zweiten Achselements mit dem ersten Achselement.

Das Herstellungsverfahren für eine modulare Achse für eine Förderrolle umfasst ein Anordnen von zwei Achselementen mit gewünschten Eigenschaften und in gewünschter Konfiguration und ein Verbinden der Achselemente, wobei das Verbinden kraftschlüssig, formschlüssig und/oder stoffschlüssig erfolgen kann. Wie auch bei der Achse der Förderrolle kann auch bei dem Verfahren das erste Achselement ein Adapter oder ein Achsmittelrohr sein und es sich bei dem zweiten Achselement entweder um einen Achsstummel oder den Adapter handeln.

Die sich aufgrund dieses bevorzugten Verfahrens ergebenden Vorteile wurden bereits eingangs in Bezug auf die Achse für die Förderrolle diskutiert.

Weiter bevorzugt umfasst das Herstellungsverfahren die Schritte: Bereitstellen eines dritten Achselements, welches zumindest im Bereich eines freien Endes einen Hohlraum aufweist; und Anordnen des zweiten Elements zumindest bereichsweise in dem Hohlraum des dritten Achselements; und Aufbringen einer Kraft auf einen Bereich des Außenumfangs des dritten Achselements zum kraftschlüssigen Verbinden des ersten Achselements mit dem dritten Achselement.

Sofern es sich bei dem dritten Achselement um das Achsmittelrohr handelt, handelt es sich bei dem ersten Achselement wiederum um den Adapter und bei dem zweiten Achselement wiederum um den Achsstummel, wie es bereits im Hinblick auf die bevorzugte Achse für die Förderrolle beschrieben wurde.

Ein dritter Aspekt, der für das Verständnis hilfreich ist, wie die Aufgabe gelöst wird, betrifft ein Verfahren zur Herstellung einer Achse bzw. eines Achsendes für eine Förderrolle umfassend die Schritte: Bereitstellen eines zweiten Achselements, welches zumindest im Bereich eines freien Endes einen Hohlraum aufweist; Bereitstellen eines dritten Achselements; Anordnen des dritten Elements zumindest bereichsweise in dem Hohlraum des zweiten Achselements; Aufbringen einer Kraft auf einen Bereich des Außenumfangs des zweiten Achselements zum kraftschlüssigen Verbinden des dritten Achselements mit dem zweiten Achselement; Bereitstellen eines ersten Achselements, welches zumindest im Bereich eines freien Endes einen Hohlraum aufweist; und Anordnen des zweiten Elements zumindest bereichsweise in dem Hohlraum des ersten Achselements; und Aufbringen einer Kraft auf einen Bereich des Außenumfangs des ersten Achselements zum kraftschlüssigen Verbinden des zweiten Achselements mit dem ersten Achselement.

Hier handelt es sich um das bevorzugte Herstellungsverfahren, wenn zur Realisierung eines Endes der Achse für die Förderrolle drei Achselemente zur Anwendung kommen sollen. An dieser Stelle sei auch erwähnt, dass im Hinblick auf dieses bevorzugte Herstellungsverfahren die gesamte Achse der Förderrolle aus fünf Achselementen besteht. Sofern die Achse symmetrisch ausgebildet sein soll sind die jeweiligen Achselemente sowie deren Positionierung relativ zueinander an beiden Achsenden identisch.

Weiter bevorzugt umfasst das Verfahren die Schritte: Auswählen einer Achslänge und/oder Achsendenform und/oder eines Achsüberstands; Herstellen der Achse derart, dass die hergestellte Achse die bzw. den ausgewählte(n) Achslänge und/oder Achsendenform und/oder Achsüberstand aufweist.

Das beschriebene Herstellungsverfahren ermöglicht insbesondere ein automatisiertes, individuelles Zusammenfügen der einzelnen Achselemente, wodurch eine hohe Stückzahl pro Zeiteinheit hergestellt werden kann. Ebenfalls ist die Herstellung von Kleinserien möglich, ohne aufwendige Umrüstungen der Werkzeuge und/oder Maschinen und damit einhergehenden Produktionsunterbrechungen. Durch den modularen Aufbau der Achsen bzw. Achsenden ist es möglich, eine Zufütterung bzw. Bereitstellung der einzelnen, unterschiedlichen Achselemente durch Vorratsbehälter umzusetzen. Dabei können beispielsweise die entsprechenden Achselemente aus den Vorratsbehältern entnommen und einer Vorrichtung zugeführt werden, welche die jeweiligen Achselemente miteinander verbindet. Zum Beispiel werden zunächst die jeweiligen Achsstummel und Adapter zusammengefügt und im Anschluss daran die zwei Einheiten, bestehend aus jeweils Adapter und Achsstummel, mit dem Achsmittelrohr verbunden. Das Achsmittelrohr weist bevorzugt ein bestimmtes Maß auf, wobei lediglich die Länge des Achsmittelrohrs je nach Konfiguration der Achse variiert werden kann.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen, sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können.

### Kurze Beschreibung der Zeichnungen

- Figur 1: zeigt einzelne Elemente eines modularen Achsendes der Achse einer Förderrolle;
- Figur 2: zeigt ein modulares Achsende der Achse einer Förderrolle;
- Figur 3: zeigt eine Achse einer Förderrolle umfassend zwei modulare Achsenden gemäß einer erfindungsgemäßen Ausführungsform;
- Figur 4: zeigt zwei unterschiedliche Anordnungen eines Adapters und eines Achsstummels; und
- Figur 5: zeigt beispielhaft verschiedene Ausgestaltungen von Adaptern und Achsstummeln.

### Detaillierte Beschreibung der Zeichnungen

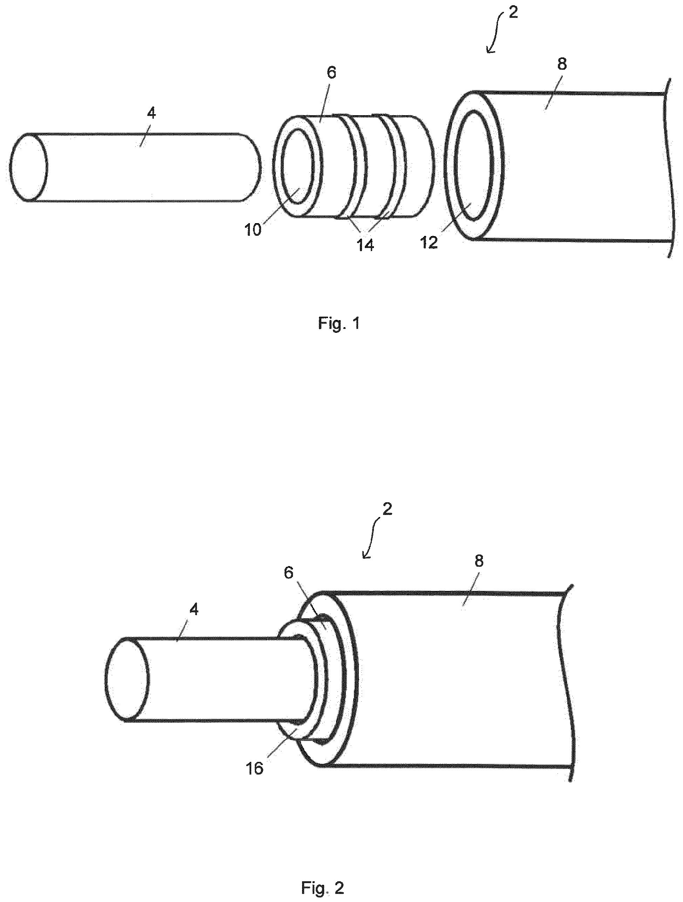

Die **Figur 1** zeigt Achselemente einer Achse 2 einer Förderrolle.

Das abgebildete Achsende der Achse 2 besteht aus drei Achselementen, nämlich einem Achsstummel 4, einem Adapter 6 und einem Achsmittelrohr 8. In der gezeigten Ausführungsform weisen der Achsstummel 4, der Adapter 6 und das Achsmittelrohr 8 einen im Wesentlichen runden Querschnitt auf. Darüber hinaus weisen der Adapter 6 und das Achsmittelrohr 8 jeweils einen in Axialrichtung durchgängigen Hohlraum 10, 12 auf. Der Außenumfang bzw. Durchmesser bzw. die Dicke des Achsstummels 4, welcher bevorzugt zumindest bereichsweise aus Vollmaterial besteht, ist geringfügig geringer als der Innenumfang bzw. Durchmesser des Hohlraums 10 des Adapters 6, sodass der Adapter 6 dafür geeignet ist, den Achsstummel 4 zumindest bereichsweise in dem Hohlraum 10 aufzunehmen. Der Adapter 6 weist an seinem Außenumfang in dieser bevorzugten Ausführungsform zwei in Längsachsenrichtung voneinander beabstandete Wulste 14 auf. Die auf der Außenseite des Adapters 6 angeordneten Wulste 14 können in Umfangsrichtung durchgängig oder unterbrochen ausgebildet sein. Die Wulste 14 können auch als Federn bzw. Zungen bzw. Ausbuchtungen bezeichnet werden und sind dabei in einem Bereich des Adapters 6 angeordnet, welcher, in einem zusammengesetzten Zustand des Achsendes, mit dem Achsmittelrohr 8 in Kontakt steht bzw. mit diesem verbunden wird. Die Wulste 14 führen zu einer verbesserten Verbindung zwischen Adapter 6 und Achsmittelrohr 8, insbesondere bei einer Verbindung via Kraftschluss. Sowohl der Außenumfang bzw. Außendurchmesser des Adapters 6 als auch der maximale Außenumfang der Wulste 14 sind dabei derart dimensioniert, dass der Adapter 6 auf einfache Weise, d.h. mit nur geringem oder ohne Kraftaufwand, in Axialrichtung in den Hohlraum 12 des Achsmittelrohrs 8 zumindest bereichsweise eingesetzt werden kann. Das Achsmittelrohr 8 ist in dieser bevorzugten Ausführungsform hohl ausgestaltet und weist einen bestimmten Umfang und eine bestimmte Wandstärke entsprechen den Anforderungen des geplanten Einsatzbereiches auf. Auch die Dimensionierung, insbesondere die Länge des Achsstummels 4 und/oder des Adapters 6 werden speziell nach den Anforderungen und in Kompatibilität mit den anderen Achselementen gewählt.

Nicht gezeigt sind verschiedene Ausgestaltungen des freien Endes des Achsstummels 4.

Insbesondere kann der Achsstummel 4 zumindest eine Bohrungen, ein Gewinde, eine Nut, eine Fase, eine Kerbe und ähnliche Merkmale aufweisen, welche geeignet sind, mit komplementären Einrichtungen eines Montagerahmens ineinander zu greifen bzw. die Achse mit einem Montagerahmen zu verbinden. Beispielsweise kann der Achsstummel 4 eine Bohrung an der Endfläche des freien Endes aufweisen, um auf einem Stift, welcher von einem Montagerahmen hervorragt, montiert zu werden. Alternativ kann eine solche Bohrung ein Innengewinde aufweisen, sodass der Achsstummel 4 beispielsweise mit einer Schraube an einem Montagerahmen befestigt werden kann. Ebenso denkbar ist ein Achsstummel 4, welcher ein Außengewinde im Endbereich aufweist, sodass der Achsstummel 4 mit einer Mutter fixiert werden kann.

Die **Figur 2** zeigt ein Achsende der Achse 2, welches aus den in Figur 1 gezeigten zusammengefügten Achselementen besteht. In der gezeigten bevorzugten Ausführungsform ist der Adapter 6 in dem Hohlraum 12 des Achsmittelrohrs 8 derart angeordnet, dass ein Bereich des Adapters 6 aus dem Hohlraum 12 des Achsmittelrohrs 8 hinausragt. Der Verbindungsbereich des Adapters 6 und die Wülste 14 sind innerhalb des Hohlraums 12 des Achsmittelrohrs 8 angeordnet. Bevorzugt ist der Adapter 6 mit dem Achsmittelrohr 8 dreh- und zugfest verbunden, bevorzugt kraftschlüssig. Zweckmäßigerweise erfolgt durch Aufbringen einer Kraft auf einen Bereich des Außenumfangs des Achsmittelrohrs 8, welcher dem Verbindungsbereich des Adapters 6 und des Achsmittelrohrs 8 gegenüberliegt, eine kraftschlüssige Verbindung aufgrund einer Verformung des Achsmittelrohrs 8 und/oder des Adapters 6 im Verbindungsbereich. Alternativ und/oder zusätzlich kann die Verbindung stoffschlüssig und/oder auf andere geeignete Weise erfolgen. Grundsätzlich ist die Positionierung, d.h. die Anordnung in Axialrichtung, des Adapters 6 in Relation zu dem Hohlraum 12 des Achsmittelrohrs 8 frei wählbar, sofern sich ein für eine feste Verbindung zwischen Adapter 6 und Achsmittelrohr 8 ausreichender Verbindungsbereich des Adapters 6 innerhalb des Hohlraums 12 des Achsmittelrohrs 8 befindet.

Die gezeigte bevorzugte Ausführungsform bietet beispielsweise den Vorteil, dass eine Schraubenfeder, welche um den Achsstummel 4 angeordnet ist, an der Endfläche 16 des Adapters 6 anliegt, anstatt an der Endfläche des Achsmittelrohrs 8. Da in der Regel die Wandstärke, und in der Folge auch die Endfläche 16, des Adapters 6 größer ist als die Wandstärke sowie die Endfläche des Achsmittelrohrs 8, bietet ein aus dem Hohlraum 12 des Achsmittelrohrs 8 hervorragender Adapter 6 eine größere Anliege- bzw. Anstoßfläche für eine solche Feder. Gleiches gilt für den Fall, indem das Achsende der Achse 2 federlos an der Lagerbaugruppe, im Regelfall bestehend aus Rollenboden, Dichtung und Kugellager, der Förderrolle anliegt. Der Achsstummel 4 ist bereichsweise im Hohlraum 10 des Adapters 6 angeordnet und mit diesem fest verbunden. Das Verbinden kann dabei kraft-, form- und/oder stoffschlüssig erfolgen.

Die Positionierung des Achsstummels 4 gegenüber dem Adapter 6 in Axialrichtung erfolgt entsprechend den Anforderungen bzw. Konfektionswünschen der letztlich herzustellenden Förderrolle. Insbesondere ist die Anordnung in Axialrichtung des Achsstummels 4 in Relation zu dem Hohlraum 10 des Adapters 6 frei wählbar, sofern sich ein für eine feste Verbindung zwischen Achsstummel 4 und Adapter 6 ausreichender Verbindungsbereich des Achsstummels 4 innerhalb des Hohlraums 10 des Adapters 6 befindet.

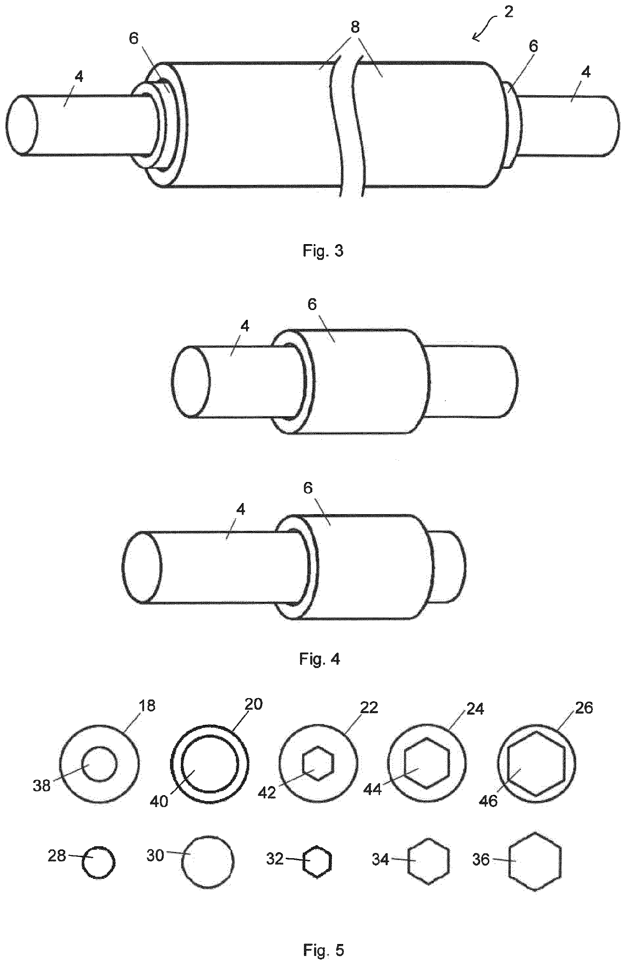

Die **Figur 3** zeigt beide Achsenden der Achse 2 aus Figur 2. Die Achse ist hier symmetrisch ausgebildet und weist insoweit zwei identische Achsenden auf, die jeweils modular ausgebildet sind. Die Achse 2 besteht somit aus dem Achsmittelrohr 8, zwei Adaptern 6 und zwei Achsstummeln 4. Die symmetrisch ausgebildete Achse 2 weist somit identische Adapter 6 und Achsstummel 4 auf. Jedoch können in anderen Ausführungsformen Adapter 6 und Achsstummel 4 sowie deren Anordnung an den Achsenden unterschiedlich ausgebildet sein. Selbiges gilt für eine etwaige, jedoch nicht gezeigte Ausgestaltung des freien Endes der Achsstummel 4.

Die **Figur 4** zeigt zwei unterschiedliche Anordnungen ein und desselben Achsstummels 4 in dem Adapter 6. Die Achsstummel 4 und Adapter 6 haben jeweils identische Maße. Einzig die Anordnung bzw. Positionierung des Achsstummels 4 gegenüber dem Adapter 6 ist unterschiedlich. Der Adapter 6 weist einen durchgängigen Hohlraum 10 auf, in dem der Achsstummel 4 bereichsweise angeordnet ist. Ein Bereich des Achsstummels 4, welcher sich jeweils im Hohlraum 10 des Adapters 6 befindet, umfasst den jeweiligen Verbindungsbereich des Achsstummels 4. Wie in Figur 4 zu erkennen ist, ermöglicht die variable Anordnung des Achsstummels 4 gegenüber dem Adapter 6 eine Vielzahl unterschiedlicher Ausgestaltungen bzw. Konfigurationen mit identischen Achselementen bzw. Modulelementen. Die gezeigte Variabilität bezüglich der Positionierung des Achsstummels 4 und Adapter 6 besteht analog in Bezug auf den Adapter 6 und das Achsmittelrohr 8.

Die **Figur 5** zeigt verschiedene bevorzugte Ausführungsformen von Adaptern 18, 20, 22, 24, 26 mit jeweils einem passenden Achsstummeln 28, 30, 32, 34, 36. Alle in Figur 5 dargestellten Adapter 18-26 haben einen identischen Außenumfang und eine identische Form des Außenumfangs im Querschnitt in achsensenkrechter Richtung. Folglich sind alle gezeigten Adapter 18-26 geeignet, mit einem identischen Achsmittelrohr ein Achsende einer Achse für eine Förderrolle zu bilden.

Die in Figur 5 dargestellten Adapter 18-26 weisen jeweils Hohlräume 38, 40, 42, 44, 46 mit unterschiedlichen Formen und/oder Dimensionen auf. Die jeweils zu den Adaptern 18-26 passenden bevorzugten Achsstummel 28-36 weisen eine zu den Hohlräumen 38-46 der Adapter 18-26 identische Form auf und sind derart dimensioniert, dass der jeweilige Achsstummel 28-36 leicht in Axialrichtung in den jeweiligen Hohlräumen 38-46 der Adapter 18-26 angeordnet werden kann und zugleich ein geringes Spiel/Beweglichkeit in achsensenkrechter Richtung aufweist.

Dabei bietet zum Beispiel eine sechseckige Form der Achsstummel 32-36 und der entsprechenden Hohlräume 42-46 der Adapter 22-26 den Vorteil, dass die Achsstummel 32-36 und die Hohlräume 42-46 der Adapter 22-26 formschlüssig in achsensenkrechter Richtung und drehfest verbunden sind.

Die in den Figuren 4 und 5 gezeigten Variationen verdeutlichen die große Anzahl an Konfigurationsmöglichkeiten einer modularen Achse für eine Förderrolle. Insbesondere können Achsen mit verschiedensten Konfigurationen mithilfe einer geringen Anzahl von Elementen hergestellt werden. Beispielsweise kann ein Achsmittelrohr mit einem bestimmten Durchmesser und einer bestimmten Wandstärke für eine Vielzahl von unterschiedlichen Ausgestaltungen von Förderrollen verwendet werden. Durch entsprechende Adapter können Achsstummel unterschiedlicher Form und/oder Dimension mit einem stets identischen Achsmittelrohr zusammengefügt werden und/oder unterschiedliche Überstände des Achsstummels über das Ende des Achsmittelrohrs realisiert werden. Dies ist insbesondere vorteilhaft, da durch die Bereitstellung der einzelnen Achselemente ein Zusammenfügen einer Achse vollautomatisch und höchst individualisierbar umgesetzt werden kann. Dies erspart Arbeitsschritte, insbesondere Arbeitsschritte, welche zur Einstellung bzw. Umrüstung der Produktionsmaschinen nötig sind und welche eine Unterbrechung der Produktion verursachen.

### Bezugszeichenliste

- 2: Achse (für eine Förderrolle)
- 4: Achsstummel (zweites bzw. drittes Achselement)
- 6: Adapter (erstes bzw. zweites Achselement)
- 8: Achsmittelrohr (erstes bzw. drittes Achselement)
- 10: Hohlraum (von Adapter 6)
- 12: Hohlraum (von Achsmittelrohr 8)
- 14: Wulst
- 16: Endfläche (von Adapter 6)
- 18-26: Adapter
- 28-36: Achsstummel
- 38-46: Hohlräume (von Adaptern 18-26)

## Patentansprüche

1. Achse (2) für eine Förderrolle umfassend:
ein erstes Achselement (8);
zwei zweite Achselemente (6); und
zwei dritte Achselemente (4);
wobei:
das erste Achselement (8) als bevorzugt hohles Achsmittelrohr ausgebildet ist und zumindest im Bereich seiner freien Enden jeweils einen Hohlraum (12) aufweist;
die zweiten Achselemente (6) als Adapter ausgebildet sind, jeweils zumindest im Bereich eines ihrer freien Enden einen Hohlraum (10) aufweisen, zumindest bereichsweise in jeweils einem Hohlraum (12) des ersten Achselements (8) an den jeweiligen Endbereichen des ersten Achselements (8) angeordnet sind und in den Hohlräumen (12) kraftschlüssig mit dem ersten Achselement (8) verbunden sind; und
die dritten Achselemente (4) zumindest bereichsweise in jeweils einem Hohlraum (10) der zweiten Achselemente (6) an den jeweiligen Endbereichen der zweiten Achselemente (6) angeordnet sind und in diesen Hohlräumen (10) kraftschlüssig mit den zweiten Achselementen (6) verbunden sind.

2. Achse (2) nach Anspruch 1, wobei:
das erste Achselement (8) zwei Verbindungsbereiche aufweist, welche entlang des Innenumfangs der Hohlräume (12) des ersten Achselements (8) angeordnet sind;
die zweiten Achselemente (6) jeweils einen Verbindungsbereich aufweisen, welcher entlang des Außenumfangs der zweiten Achselemente (6) angeordnet sind; und
das erste Achselement (8) mit den zweiten Achselementen (6) zumindest in den Verbindungsbereichen kraftschlüssig verbunden sind.

3. Achse (2) nach Anspruch 1 oder 2, wobei der achsensenkrechte Querschnitt zumindest eines der Hohlräume (12) des ersten Achselements (8) und der achsensenkrechte Querschnitt zumindest eines der zweiten Achselemente (6) im Wesentlichen die gleiche Form aufweisen; und/oder
der achsensenkrechte Querschnitt zumindest eines der Hohlräume (10) der zweiten Achselemente (6) und der achsensenkrechte Querschnitt zumindest eines der dritten Achselemente (4) im Wesentlichen die gleiche Form aufweisen.

4. Achse (2) nach Anspruch 3, wobei die Querschnitte eine der Formen aufweisen:
rund oder vieleckig, insbesondere viereckig, sechseckig oder achteckig.

5. Achse (2) nach einem der vorherigen Ansprüche, wobei das erste Achselement (8) und zumindest eines der zweiten Achselemente (6) durch den Innenumfang des Hohlraums (12) des ersten Achselements (8) und den Außenumfang des zweiten Achselements (6) formschlüssig verbunden sind; und/oder
wobei zumindest eines der dritten Achselemente (4) durch den Innenumfang des Hohlraums (10) eines der zweiten Achselemente (6) und den Außenumfang des dritten Achselements (4) formschlüssig verbunden sind.

6. Achse (2) nach einem der vorherigen Ansprüche, wobei das erste Achselement (8) und/oder zumindest eines der zweiten Achselemente (6) und/oder zumindest eines der dritten Achselemente (4) in den Verbindungsbereichen aufweisen:
zumindest eine Einbuchtung, Nut, Rille, Ritze, Riefe, Kerbe, Ausbuchtung, Wulst und/oder Feder,
welche bevorzugt zumindest bereichsweise entlang des Innenumfangs des Hohlraums (12) des ersten Achselements (8) und/oder bereichsweise entlang des Innenumfangs des Hohlraums (10) des zweiten Achselements (4) und/oder entlang des Außenumfangs des zweiten Achselements (6) und/oder entlang des Außenumfangs des dritten Achselements (4) vorgesehen sind.

7. Achse (2) nach einem der vorhergehenden Ansprüche, wobei ein Endbereich zumindest eines der dritten Achselemente (4), welcher nicht in dem Hohlraum (10) des zweiten Achselements (6) angeordnet ist, eine Bohrung oder ein Gewinde oder eine Nut oder eine Fase oder eine Kerbe oder eine Kombination davon aufweist.

8. Verfahren zur Herstellung einer Achse (2) für eine Förderrolle umfassend die Schritte:
Bereitstellen von zwei zweiten Achselementen (6), welche jeweils zumindest im Bereich eines freien Endes einen Hohlraum (10) aufweisen;
Bereitstellen von zwei dritten Achselementen (4);
Anordnen jeweils eines der dritten Achselemente (4) zumindest bereichsweise in jeweils einem der Hohlräume (10) der zweiten Achselemente (6);
Aufbringen einer Kraft auf einen Bereich des Außenumfangs der zweiten Achselemente (6) zum kraftschlüssigen Verbinden der dritten Achselemente (4) mit jeweils einem der zweiten Achselemente (6);
Bereitstellen eines ersten Achselements (8), welches als bevorzugt hohles Achsmittelrohr ausgebildet ist und zumindest im Bereich seiner freien Enden jeweils einen Hohlraum (12) aufweist; und
Anordnen jeweils eines der zweiten Achselemente (6) zumindest bereichsweise in jeweils einem der Hohlräume (12) des ersten Achselements (8); und
Aufbringen einer Kraft auf Bereiche des Außenumfangs des ersten Achselements (8) zum kraftschlüssigen Verbinden der zweiten Achselemente (6) mit dem ersten Achselement (8).

9. Verfahren nach Anspruch 8 mit den Schritten:
Auswählen einer Achslänge und Achsendenform und eines Achsüberstands vorzugsweise vor dem Bereitstellen der Achselemente;
Herstellen der Achse derart, dass die hergestellte Achse die ausgewählte Achslänge und Achsendenform und den ausgewählten Achsüberstand aufweist.

## Claims

1. An axle (2) for a conveyor roller, comprising:
a first axle element (8);
two second axle elements (6); and
two third axle elements (4);
wherein:
the first axle element (8) is designed as a preferably hollow axle center tube, and has a respective cavity (12) at least in the area of its free ends;
the second axle elements (6) are designed as adapters, have a respective cavity (10) at least in the area of their free ends, are at least regionally arranged in a respective cavity (12) of the first axle element (8) at the respective end areas of the first axle element (8), and are non-positively connected with the first axle element (8) in the cavities (12); and
the third axle elements (4) are at least regionally arranged in a respective cavity (10) of the second axle elements (6) at the respective end areas of the second axle elements (6), and are force-fit connected with the second axle elements (6) in these cavities (10).

2. The axle (2) according to claim 1, wherein:
the first axle element (8) has two connecting areas, which are arranged along the inner periphery of the cavities (12) of the first axle element (8);
the second axle elements (6) each have a connecting area, which are arranged along the outer periphery of the second axle elements (6); and
the first axle element (8) is non-positively connected with the second axle elements (6) at least in the connecting areas.

3. The axle (2) according to claim 1 or 2, wherein the perpendicular cross section of at least one of the cavities (12) of the first axle element (8) and the perpendicular cross section of at least one of the second axle elements (6) essentially have the same shape, and/or
the perpendicular cross section of at least one of the cavities (10) of the second axle elements (6) and the perpendicular cross section of at least one of the third axle elements (4) have essentially the same shape.

4. The axle (2) according to claim 3, wherein the cross sections have one of the following shapes:
round or polygonal, in particular quadrangular, hexagonal, or octagonal.

5. The axle (2) according to any of the preceding claims, wherein the first axle element (8) and at least one of the second axle elements (6) are positively connected by the inner periphery of the cavity (12) of the first axle element and the outer periphery of the second axle element (6); and/or
wherein at least one of the third axle elements (4) are positively connected by the inner periphery of the cavity (10) of one of the second axle elements (6) and the outer periphery of the third axle element (4).

6. The axle (2) according to any of the preceding claims, wherein the first axle element (8) and/or at least one of the second axle elements (6) and/or at least one of the third axle elements (4) have the following in the connecting areas:
at least one recess, groove, flute, crack, score, notch, bulge, bead and/or spring,
which preferably are provided at least regionally along the inner periphery of the cavity (12) of the first axle element (8) and/or regionally along the inner periphery of the cavity (10) of the second axle element (4) and/or along the outer periphery of the second axle element (6) and/or along the outer periphery of the third axle element (4).

7. The axle (2) according to any of the preceding claims, wherein an end area of at least one of the third axle elements (4) not arranged in the cavity (10) of the second axle element (6) has a borehole or a thread or groove or a chamfer or a notch or a combination thereof.

8. A method for manufacturing an axle (2) for a conveyor roller, comprising the following steps:
Providing two second axle elements (6), which each have a cavity (10) at least in the area of a free end;
Providing two third axle elements (4);
Arranging a respective one of the third axle elements at least regionally in a respective one of the cavities (10) of the second axle elements (6);
Applying a force to an area of the outer periphery of the second axle elements (6) for non-positively connecting the third axle elements (4) with a respective one of the second axle elements (6);
Providing a first axle element (8), which is designed as a preferably hollow axle center tube, and has a respective cavity (12) at least in the area of its free ends; and
Arranging a respective one of the second axle elements (6) at least regionally in a respective one of the cavities (12) of the first axle element (8); and
Applying a force to areas of the outer periphery of the first axle element (8) for non-positively connecting the second axle elements (6) with the first axle element (8).

9. The method according to claim 8, with the following steps:
Selecting an axle length and axle end shape and an axle overhang, preferably before providing the axle elements;
Manufacturing the axle in such a way that the manufactured axle has the selected axle length and axle end shape and the selected axle overhang.

## Revendications

1. Axe (2) pour un rouleau de transport comprenant :
un premier élément d'axe (8),
un deuxième élément d'axe (6), et
un troisième élément d'axe (4),
sachant que :
le premier élément d'axe (8) est constitué de préférence sous la forme d'un tube central d'axe et comporte respectivement au moins dans la zone de ses extrémités libres un espace creux (12),
les deuxièmes éléments d'axe (6) sont constitués sous la forme d'adaptateurs, comportent respectivement un espace creux (10) dans la zone d'une de ses extrémités libres, sont disposés au moins par endroits dans respectivement un espace creux (12) du premier élément d'axe (8) sur les zones d'extrémité respectives du premier élément d'axe (8) et sont reliés dans les espaces creux (12) par conformité de force au premier élément d'axe (8), et
les troisièmes éléments d'axe (4) sont disposés au moins par endroits dans respectivement un espace creux (10) des deuxièmes éléments d'axe (6) sur les zones d'extrémité respectives des deuxièmes éléments d'axe (6) et sont reliés dans ces espaces creux (10) par conformité de force aux deuxièmes éléments d'axe (6).

2. Axe (2) selon la revendication 1, sachant que :
le premier élément d'axe (8) comporte deux zones de liaison, lesquelles sont disposées le long de la périphérie intérieure des espaces creux (12) du premier élément d'axe (8),
les deuxièmes éléments d'axe (6) comportent respectivement une zone de liaison, laquelle est disposée respectivement le long de la périphérie extérieure du deuxième élément d'axe (6), et
le premier élément d'axe (8) est relié par conformité de force aux deuxièmes éléments d'axe (6) au moins dans les zones de liaison.

3. Axe (2) selon la revendication 1 ou 2, sachant que la section perpendiculaire à l'axe d'au moins un des espaces creux (12) du premier élément d'axe (8) et la section perpendiculaire à l'axe d'au moins un des deuxièmes éléments d'axe (6) comportent pour l'essentiel la même forme, et/ou
la section perpendiculaire à l'axe d'au moins un des espaces creux (10) des deuxièmes éléments d'axe (6) et la section perpendiculaire à l'axe d'au moins un des troisièmes éléments d'axe (4) comportent pour l'essentiel la même forme.

4. Axe (2) selon la revendication 3, sachant que les sections comportent une des formes suivantes:
ronde ou polygonale, en particulier quadrangulaire, hexagonale ou octogonale.

5. Axe (2) selon l'une quelconque des revendications précédentes, sachant que le premier élément d'axe (8) et au moins un des deuxièmes éléments d'axe (6) sont reliés par conformité de forme par la périphérie intérieure de l'espace creux (12) du premier élément d'axe (8) et la périphérie extérieure du deuxième élément d'axe (6), et/ou
sachant qu'au moins un des troisièmes éléments d'axe (4) est relié par conformité de forme par la périphérie intérieure de l'espace creux (10) d'un des deuxièmes éléments d'axe (6) et la périphérie extérieure du troisième élément d'axe (4).

6. Axe (2) selon l'une quelconque des revendications précédentes, sachant que le premier élément d'axe (8) et/ou au moins un des deuxièmes éléments d'axe (6) et/ou au moins un des troisièmes éléments d'axe (4) comportent dans les zones de liaison :
au moins un creux, une rainure, une cannelure, une fente, une strie, une encoche, une indentation, un bourrelet et/ou un ressort,
lesquels sont de préférence prévus au moins par endroits le long de la périphérie intérieure de l'espace creux (12) du premier élément d'axe (8) et/ou par endroits le long de la périphérie intérieure de l'espace creux (10) du deuxième élément d'axe (4) et/ou le long de la périphérie extérieure du deuxième élément d'axe (6) et/ou le long de la périphérie extérieure du troisième élément d'axe (4).

7. Axe (2) selon l'une quelconque des revendications précédentes, sachant qu'une zone finale d'au moins un des troisièmes éléments d'axe (4), laquelle n'est pas disposée dans l'espace creux (10) du deuxième élément d'axe (6), comporte un trou ou un filetage ou une rainure ou un chanfrein ou une encoche ou une combinaison de ceux-ci.

8. Procédé de fabrication d'un axe (2) pour un rouleau de transport comprenant les étapes de :
mise à disposition de deux deuxièmes éléments d'axe (6), lesquels comportent respectivement au moins un espace creux (10) dans une zone d'une extrémité libre,
mise à disposition de deux troisièmes éléments d'axe (4),
mise en place respectivement d'un des troisièmes éléments d'axe (4) au moins par endroits dans respectivement un des espaces creux (10) des deuxièmes éléments d'axe (6),
application d'une force sur une zone de la périphérie extérieure des deuxièmes éléments d'axe (6) pour une liaison par conformité de force des troisièmes éléments d'axe (4) avec respectivement un des deuxièmes éléments d'axe (6), mise à disposition d'un premier élément d'axe (8), lequel est constitué de préférence sous la forme d'un tube central d'axe de préférence creux et comporte respectivement un espace creux (12) au moins dans la zone de ses extrémités libres, et
mise en place respectivement d'un des deuxièmes éléments d'axe (6) au moins par endroits dans respectivement un des espaces creux (12) du premier élément d'axe (8), et
application d'une force sur les zones de la périphérie extérieure du premier élément d'axe (8) pour la liaison par conformité de force des deuxièmes éléments d'axe (6) avec le premier élément d'axe (8).

9. Procédé selon la revendication 8 avec les étapes de :
sélection d'une longueur d'axe et d'une forme d'extrémité d'axe et d'une projection d'axe, de préférence avant la mise à disposition des éléments d'axe, fabrication de l'axe de telle manière que l'axe fabriqué comporte la longueur d'axe et la forme d'extrémité d'axe sélectionnées et la projection d'axe sélectionnée.
